Europäisches Patentamt

European Patent Office

Office européen des brevets

(19)

(11) **EP 1 701 401 A1**

(12) **EUROPÄISCHE PATENTANMELDUNG**

(43) Veröffentlichungstag:
**13.09.2006 Patentblatt 2006/37**

(51) Int Cl.:
***H01M 8/04*** *(2006.01)*

(21) Anmeldenummer: **06002797.6**

(22) Anmeldetag: **11.02.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **08.03.2005 DE 102005010497**

(71) Anmelder: **Forschungszentrum Jülich GmbH
52425 Jülich (DE)**

(72) Erfinder:
• **Janssen, Holger
52428 Jülich (DE)**
• **Nölke, Marcus
40878 Ratingen (DE)**
• **Zwaygardt, Walter
52428 Jülich (DE)**

(54) **Verfahren zum Betreiben eines Direkt-Methanol-Brennstoffzellenstapels**

(57) Die Erfindung beschreibt ein Verfahren zum Betreiben eines Direkt-Methanol-Brennstoffzellenstapels insbesondere im Lastbetrieb, bei dem Methanol in einen Anodenraum des Brennstoffzellenstapels geleitet wird. Dabei wird zunächst die Stapelspannung des Brennstoffzellenstapels ohne Last gemessen. Im Anfahrbetrieb des Systems oder während der StandBy-Phasen ohne Stapelbelastung wird solange Methanol zugeführt, bis die Stapelspannung einen vorgegebenen Minimalwert überschreitet. Im Lastbetrieb des Brennstoffzellenstapels wird der Stapelstrom gemessen und daraus ein erster Methanolmengenstrom ermittelt. Zusätzlich wird über ein Kennfeld, welches die Permeation dieses Brennstoffzellenstapels mit dem Stapelstrom korreliert, ein Zuschlag in Form eines zweiten Methanolmengenstroms ermittelt. Über eine Dosierpumpe wird ein Methanolmengenstrom in den Anodenraum eingeleitet, der der Summe aus erstem und zweitem Methanolmengenstrom entspricht.

Vorteilhaft kann zusätzlich noch die Brennstoffzellenstapeltemperatur gemessen werden und ein Kennfeld verwendet werden, welches die Temperaturabhängigkeit zusätzlich berücksichtigt.

Üblicherweise wird ein zweiter Methanolmengenstrom ermittelt, der ca. 10 bis 25 % des ersten Methanolmengenstroms entspricht, so dass der Brennstoffzellenstapel im Lastbetrieb erfindungsgemäß mit einem Methanolüberschuss im Bereich von 10 bis 25 % gefahren wird.

**EP 1 701 401 A1**

**Beschreibung**

Die Erfindung betrifft ein Verfahren zum Betreiben eines Direkt-Methanol-Brennstoffzellenstapels gemäß dem Oberbegriff des geltenden Anspruchs 1.

Stand der Technik

Eine Brennstoffzelle weist eine Kathode, einen Elektrolyten sowie eine Anode auf. Der Kathode wird ein Oxidationsmittel, beispielsweise Luft, und der Anode wird ein Brennstoff, z. B. Wasserstoff, zugeführt. Mehrere Brennstoffzellen werden in der Regel zur Erzielung großer elektrischer Leistungen durch verbindende Elemente elektrisch und mechanisch miteinander verbunden. Diese Anordnung wird Brennstoffzellenstapel genannt. Dieser besteht aus den bipolaren Platten und den Elektroden-Elektrolyt-Einheiten.

Bei Direkt-Methanol-Brennstoffzellen-Systemen (DMFC-Systemen) wird flüssiges Methanol als Brennstoff verwendet, welcher mit (Luft-)Sauerstoff direkt, das heißt ohne weitere chemische und/oder thermische Zwischenschritte, in elektrischen Strom umgewandelt wird. Das Methanol wird der Anodenseite der Brennstoffzelle in der Regel nicht in Reinform, sondern mit Wasser verdünnt zugeführt. Die Verdünnung des Methanols ist erforderlich, weil die Membran zwischen Anoden- und Kathodenseite der Brennstoffzelle nicht vollständig flüssigkeitsdicht ist. Bei Vorliegen von reinem Methanol wären die Verluste auf Grund des Methanoldurchtritts durch die Membran zu hoch. Zudem ist eine Methanol/ Wassermischung, welche im Kreislauf um das Anodensystem der Brennstoffzelle geführt wird, besser geeignet, die während des Betriebs der Brennstoffzelle entstehende Wärme auszukoppeln.

Bei einer DMFC liegen die Methanolkonzentrationen typischerweise im Bereich von 0,1 M - 2 M. Im Regelfall wird das Methanol/Wassergemisch überstöchiometrisch zugeführt. Von besonderer Bedeutung für einen wirtschaftlichen Betrieb der Brennstoffzelle ist dabei die korrekte Einstellung der Methanolkonzentration. Zu niedrige Methanolkonzentrationen führen regelmäßig zu einem Absinken der Zellleistung aufgrund von Methanolmangel, während zu hohe Konzentrationen den Wirkungsgrad aufgrund der nutzlosen Verbrennung von diffundierendem Methanol auf der Kathodenseite verschlechtern. Die Methanolkonzentration sollte daher geregelt werden.

Als Stand der Technik gilt eine Regelstrecke zur Regelung der Methanolkonzentration, umfassend einen Methanolsensor. Eine solche Anordnung wird in DE 198 50 720 A1 beschrieben. Beispielsweise kann in einem Kleinrechner ein Kennfeld abgelegt werden, aus dem die optimale Methanolkonzentration für den jeweiligen Betriebspunkt (Temperatur, elektrischer Strom, Durchflussrate) hervorgeht. Weiterhin kann eine Einheit zur Methanolzudosierung vorgesehen sein. Im Zusammenspiel mit dem Methanolsensor und der Methanolzudosierung lässt sich über einen Regelalgorithmus die Methanolkonzentration in der Zelle einstellen.

Die aus dem Stand der Technik bekannte Methanolregelung ist zwar zuverlässig, aber nachteilig mit einem erheblichen baulichen und finanziellen Aufwand verbunden. Insbesondere für Kleinsysteme in einem Leistungsbereich in der Größenordnung von 10 - 500 W übersteigt der Aufwand für solch ein Regelsystem den wirtschaftlichen Rahmen. Ferner ist die Erstellung eines Kennfeldes für alle möglichen Betriebsbedingungen mit großem Aufwand verbunden.

Ähnliche Probleme stellen sich bei der Regelung von Betriebsmitteln auf der Oxidationsseite (Kathodenseite) einer Brennstoffzelle, wobei sich dies nicht nur auf Direkt-Methanol-Brennstoffzellen beschränkt. Das Oxidationsmittel, insbesondere Sauerstoff oder Luft, wird der Brennstoffzelle regelmäßig unter Druck mit Hilfe eines Kompressors zugeführt. Aus Kostengründen wäre auch hier eine Regelung für einen optimierten Betriebsbereich vorteilhaft.

Aus DE 100 58 083 A1 ist eine Regelung für ein Betriebsmittel für einen Brennstoffzellenstapel bekannt, bei dem eine Brennstoffzelle des Stapels derart modifiziert wird, dass sie zur Erzielung einer vorgegebenen Zellspannung eine etwas höhere Betriebsmittelkonzentration benötigt als die übrigen Brennstoffzellen des Stapels. Bei gleicher vorliegender Betriebsmittelkonzentration für alle Zellen liegt die Spannung der einen modifizierten Einzelzelle dann regelmäßig tiefer als die der anderen. Unterschreitet die Spannung dieser Einzelzelle einen bestimmten Grenzwert, wird über eine einfache elektronische Schaltung ein Betriebsmittel solange zusätzlich in den Betriebsmittelkreislauf eingegeben, bis die Zellspannung der einen modifizierten Brennstoffzelle diesen Grenzwert oder einen weiteren Grenzwert überschreitet. Nachteilig für dieses Verfahren ist die erforderliche Modifizierung wenigstens einer Brennstoffzelle des Stapels Voraussetzung.

Aufgabe und Lösung der Erfindung

Der Erfindung liegt die Aufgabe zugrunde, ein einfaches und preiswertes Verfahren zur Regelung wenigstens eines Betriebsmittels für einen Brennstoffzellenstapel zu schaffen.

Die Aufgabe wird gelöst durch ein Verfahren gemäß Hauptanspruch. Vorteilhafte Ausführungsformen sind den darauf rückbezogenen Ansprüchen zu entnehmen.

Gegenstand der Erfindung

Der Erfindung liegt der Gedanke zugrunde, für die Regelung eines Direkt-Methanol-Brennstoffzellenstapels nicht die Methanolkonzentration selbst als Messgröße heranzuziehen, sondern die Nachspeisung des Methanols über den bekannten Zusammenhang (Faraday-Gesetz) zwischen dem elektrischen Stackstrom und dem elektrochemisch verbrauchten Methanolmengenstrom zu regeln. Dabei ist ein vorher festgelegter Aufschlag für die Permeationsverluste des Methanols durch die Membran vorgesehen. Die genaue Kenntnis über das Permeationsverhalten der Membran ist vorteilhaft nicht notwendig.

Bei dem erfindungsgemäßen Verfahren wird sich die Methanolkonzentration im Anodenkreislauf genau so einstellen, dass das überschüssige Methanol durch die Membran von der Anodenzur Kathodenseite übertritt. Somit wird über die Höhe des Aufschlags direkt der Massenwirkungsgrad des Betriebspunktes festgelegt. Der Massenwirkungsgrad ist das Verhältnis von elektro-chemisch umgesetzter Methanolmenge zu verbrauchter Methanolmenge im System. Wird beispielsweise ein Aufschlag von 20 % eingestellt, ergibt sich ein Massenwirkungsgrad von ca. 83 %. Über Kennfeldmessungen des Stacks kann der optimale Massenwirkungsgrad ermittelt werden.

Beim Anfahren des Systems und während der Stand-By-Phasen kann regelmäßig die Leerlaufspannung herangezogen werden, um ein Maß für die aktuelle Methanolkonzentration zu erhalten. Dabei wird zunächst die Stapelspannung des Brennstoffzellenstapels ohne Last gemessen. Im Anfahrbetrieb des Systems oder während der Stand-By-Phasen ohne Stapelbelastung wird solange Methanol zugeführt, bis die Stapelspannung einen vorgegebenen Minimalwert überschreitet

Im Lastbetrieb des Brennstoffzellenstapels wird der Stapelstrom gemessen und daraus ein erster Methanolmengenstrom ermittelt. Zusätzlich wird über ein Kennfeld, welches die Permeation dieses Brennstoffzellenstapels mit dem Stapelstrom korreliert, ein Zuschlag in Form eines zweiten Methanolmengenstroms ermittelt. Über eine Dosierpumpe wird ein Methanolmengenstrom in den Anodenraum eingeleitet, der der Summe aus erstem und zweitem Methanolmengenstrom entspricht.

Vorteilhaft benötigt das erfindungsgemäße Verfahren keine aufwändige Methanolkonzentrationsmessung. Zudem führt das Verfahren keine Methanolregelung im Sinne einer Methanolregelung auf einen Konstantwert, sondern eine Steuerung der Methanolzufuhr mit der Führungsgröße "Stackstrom" durch. Vorteilhaft ist die dazu benötigte Messtechnik zur Ermittlung des Stroms, der Spannung und der Temperatur üblicherweise schon Bestandteil eines DMFC-Systems und darüber hinaus konventionelle Technik und kostengünstig.

Vorteilhaft wird die Zudosierung bzw. Zuleitung des Betriebsmittels über ein Ventil bzw. eine Dosierpumpe gesteuert.

Spezieller Beschreibungsteil

Nachfolgend wird der Gegenstand der Erfindung anhand eines Ausführungsbeispiels näher erläutert, ohne dass der Gegenstand der Erfindung dadurch beschränkt wird.

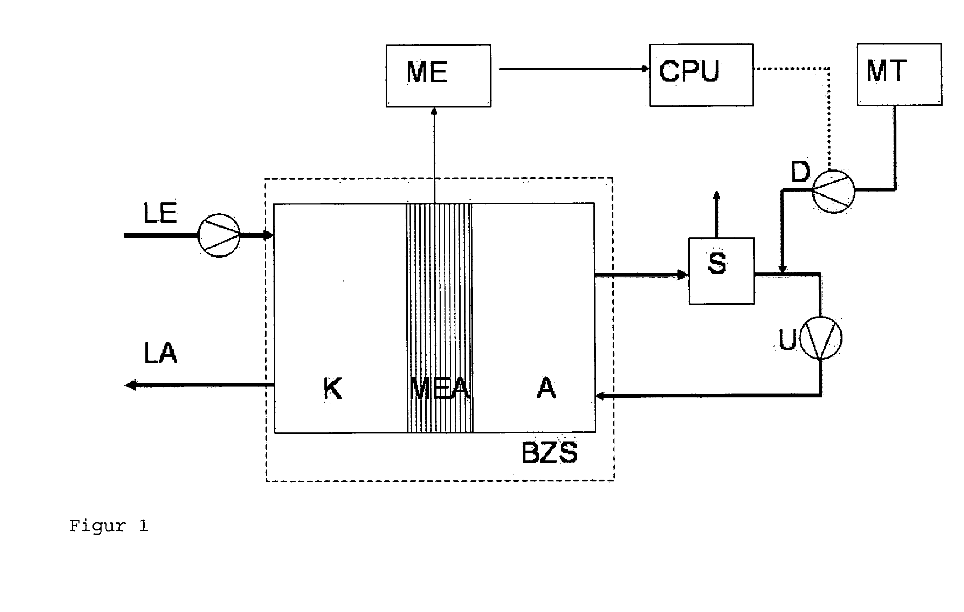

Die Figur zeigt eine vereinfachte Darstellung einer Direkt-Methanol-Brennstoffzelle aus einem Stapel. Dabei bedeuten:

K      Kathodenraum
A      Anodenraum
MEA    Membran-Elektroden-Einheit
LE     Lufteinlass
LA     Abluft
BZS    Brennstoffzellenstapel
ME     Messeinrichtung für I, U und T
CPU    Steuerung
MT     Methanoltank
D      Dosierpumpe
U      Umwälzpumpe
S      $CO_2$-Abscheider

Das Direkt-Methanol-Brennstoffzellensystem lässt sich unterteilen in ein Kathoden-Subsystem und ein Anoden-Subsystem. Das Kathoden-Subsystem besteht aus einer Luftversorgungseinheit (z. B. Lüfter oder Gebläse), einem geeigneten Leitungs- und Anschlusssystem an den Brennstoffzellenstapel, dem Kathodenraum im Stapelinneren und einem Abluftableitungssystem. Aufgabe des Kathoden-Subsystems ist die Heranführung und Verteilung von Sauerstoff (Luft) an die elektrochemisch aktiven Bereiche der Kathoden sowie die Abfuhr der Abluft.

Die Trennelemente zwischen Kathoden-Subsystem und Anoden-Subsystem bestehen aus Protonen leitenden Membranen, die im Idealfall weitestgehend gas- und flüssigkeitsdicht sind. Die Membranen sind beidseitig mit Katalysatormaterial sowie einer Diffusionsschicht beschichtet.

Das Anoden-Subsystem besteht aus den Elementen $CO_2$-Abscheider, Umwälzpumpe, Dosierpumpe, Methanoltank, einem geeigneten Leitungs- und Anschlusssystem an den Brennstoffzellenstapel sowie den Anodenraum im Stapelinneren. Aufgabe des Anoden-Subsystems ist die Heranführung und Verteilung von Methanol an die elektrochemisch aktiven Bereiche der Anoden sowie die Abfuhr des produzierten Kohlendioxids.

Abweichend von der schematischen Darstellung in der Figur besteht ein realer Stapel (Stack) aus einer wiederholenden Abfolge der Komponenten Kathodenraum, Membran-Elektroden-Einheit und Anodenraum.

Gegenstand der Erfindung ist die gezielte Zufuhr von Methanol in das Anoden-Subsystem zwecks Ausgleichs der entsprechend verbrauchten Menge. Der Methanolverbrauch auf der Anodenseite erfolgt durch elektrochemische Umsetzung sowie durch Permeation durch die real nicht flüssigkeitsdichte Membran. Die anodische Teilreaktion lautet:

$$CH_3OH + H_2O \rightarrow CO_2 + 6e^- + 6H^+ \qquad (1)$$

Der Methanolverbrauch durch anodische Reaktion lässt sich beschreiben durch das Faraday-Gesetz:

$$\dot{n}_{Methanol,reagiert} = \frac{I \cdot n_c}{z \cdot F} \qquad (2)$$

mit

| | |
|---|---|
| $n_{Methanol,reagiert}$: | Mengenstrom an elektrochemisch umgesetztem Methanol in mol/s |
| $I$: | Stromstärke in A |
| $n_c$: | Anzahl der Zellen im Stapel |
| $z$: | Anzahl der pro Formelumsatz gebildeten Protonen (= 6 für o. g. Reaktion) |
| $F$: | Faraday-Konstante (= 96485 As/mol) |

Es gibt also einen einfachen linearen Zusammenhang zwischen dem elektrochemisch umgesetzten Methanolmengenstrom und der Stromstärke.

Für eine exakte Bestimmung der optimalen zusätzlichen Methanolmenge (Ausgleich der Permeationsverluste) muss ein experimentell ermitteltes Kennfeld des entsprechenden Stacks vorhanden sein. Dies ist notwendig, da das Permeationsverhalten sowohl von Betriebsparametern (Strom, Temperatur) als auch von Stoffparametern (vor allem der Membran) abhängt. Wenn das Permeationsverhalten nicht bekannt ist, kann der zusätzlich erforderliche Methanolmengenstrom in guter Näherung abgeschätzt werden, so dass sich das Gesamtsystem zwar nicht im wirkungsgradoptimalen Arbeitspunkt befindet, aber dennoch ein stabiler und sicherer Betriebszustand erreicht werden kann. Nach dem aktuellen Stand der Technik sind Massenwirkungsgrade zwischen 80 und 90 % erreichbar. Das bedeutet, wenn ein Aufschlag auf den elektrochemisch umgesetzten Methanolmengenstrom von ca. 11 bis 25 % eingestellt wird, lässt sich das System gut betreiben.

Konkret kann eine Anlagensteuerung exemplarisch so aussehen:

- Das System befindet sich in ausgeschaltetem Zustand. Bei der vorhergehenden Abfahrprozedur lief der Kathodenlüfter einige Sekunden nach, um den Stapel zu kühlen und die Kathodenräume von flüssigem Wasser zu befreien. Dabei wird die Methanolkonzentration im Anodensystem des Stacks abgereichert.
- Beim Wiederanfahren des Systems z. B. mit Starterbatterien wird zunächst die Leerlaufspannung des Stacks überwacht. Diese ist ein Maß für die aktuelle Methanolkonzentration. Bei sehr geringer Methanolkonzentration liegt aufgrund der anodischen Mangelversorgung eine geringe Stapelspannung an. Unter kontinuierlicher Zufuhr von Methanol in den Anodenkreislauf steigt die Leerlaufspannung zunächst mit steigender Konzentration an. Der Methanolmengenstrom für den Anfahrbetrieb wird durch Vorversuche ermittelt. Er ist so groß, dass die maximalen Permeationsverluste ausgeglichen werden (Basismengenstrom).
- Da mit weiter steigender Konzentration die Verluste größer werden, sinkt die Leerlaufspannung aufgrund des überwiegenden Einflusses einer Mischpotentialbildung nach Erreichen eines Maximums wieder ab.
- Nach Erreichen des Spannungsmaximums bewirkt die Systemsteuerung die Freigabe für die Stapelbelastung.
- Im Normalbetrieb (Lastbetrieb) ist der Methanoldosiermengenstrom so groß, dass der Verbrauch durch Permeation (Basismengenstrom und Zusatzmengenstrom durch elektrischen Stromfluss) und elektrochemische Reaktion (gemäß Gleichung (2)) ausgeglichen wird. Die Methanoldosierpumpe wird über die Systemsteuerung entsprechend angesteuert.

- Um das Gesamtsystem schnell auf die erforderliche Betriebstemperatur (60-80 °C) zu bringen, kann als zusätzliche Option eine Temperaturaufschaltung in der Systemsteuerung realisiert werden. Hierbei setzt man bei gemessenen Temperaturen unterhalb der Solltemperatur den zudosierten Methanolmengenstrom weiter nach oben. Dadurch wird die Methanolpermeation erhöht, was aufgrund der kathodischen Methanoloxidationsreaktion zu einer verstärkten Wärmefreisetzung führt.

Bei Verwendung einer konventionellen Anlagensteuerungstechnik, z. B. einer speicherprogrammierbaren Steuerung oder einem Mikrocontrollersystem, sind die erforderlichen Steuerprozeduren unter Einbeziehung der aktuellen Messwerte einfach zu realisieren. Die Anlagensteuerungstechnik berechnet unter Zuhilfenahme der Messwerte und hinterlegter Kennfelder den erforderlichen Methanolmengenstrom. Die Anlagensteuerungstechnik gibt ein kontinuierliches Ausgangssignal, analog oder digital, an die Steuereinheit der Methanoldosierpumpe aus. Dieses Steuersignal legt direkt die Drehzahl und damit die Förderleitung der Methanoldosierpumpe fest.

**Patentansprüche**

1. Verfahren zum Betreiben eines Direkt-Methanol-Brennstoffzellenstapels, bei dem Methanol in einen Anodenraum des Brennstoffzellensystems geleitet wird, **gekennzeichnet durch** die Schritte

   a) während des Lastbetriebs des Brennstoffzellenstapels wird der Stapelstrom der Brennstoffzelle gemessen,
   b) aus dem gemessenen Stapelstrom wird ein erster Methanolmengenstrom ermittelt,
   c) über ein Kennfeld, welches die Permeation dieses Brennstoffzellenstapels mit dem Stapelstrom korreliert, wird ein Zuschlag in Form eines zweiten Methanolmengenstroms ermittelt,
   d) über eine Dosierpumpe wird ein Methanolmengenstrom in den Anodenraum eingeleitet, der der Summe aus erstem und zweitem Methanolmengenstrom entspricht.

2. Verfahren nach Anspruch 1, bei dem zusätzlich noch die Brennstoffzellenstapeltemperatur gemessen und ein Kennfeld verwendet wird, welches die Temperaturabhängigkeit zusätzlich berücksichtigt.

3. Verfahren nach Anspruch 1 oder 2, bei dem ein zweiter Methanolmengenstrom ermittelt wird, der 10 bis 25 % des ersten Methanolmengenstroms entspricht.

4. Verfahren nach Anspruch 1 bis 3, bei dem im Anfahrbetrieb ohne Brennstoffzellenbelastung oder in Stand-by-Phasen zusätzlich die Brennstoffzellenspannung gemessen wird, um ein Maß für die aktuelle Methanolkonzentration zu erhalten.

5. Verfahren nach Anspruch 1 bis 4, bei dem die Schritte a) bis d) kontinuierlich durchgeführt werden.

Figur 1

**EP 1 701 401 A1**

Europäisches
Patentamt

**EUROPÄISCHER RECHERCHENBERICHT**

Nummer der Anmeldung

EP 06 00 2797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2003/146094 A1 (PREIDEL WALTER) 7. August 2003 (2003-08-07) * Absatz [0003] - Absatz [0009] * ----- | 1,2 | INV. H01M8/04 |
| Y | DOHLE H ET AL: "Experimental evaluation and semi-empirical modeling of U/I characteristics and methanol permeation of a direct methanol fuel cell" JOURNAL OF POWER SOURCES, ELSEVIER, AMSTERDAM, NL, Bd. 135, Nr. 1-2, 3. September 2004 (2004-09-03), Seiten 152-164, XP004532927 ISSN: 0378-7753 * Zusammenfassung; Abbildungen 6,7,13 * * Seite 161, Absatz 3.4 - Seite 162, Absatz 3.5 * ----- | 1,2 | |

RECHERCHIERTE SACHGEBIETE (IPC)

H01M

Der vorliegende Recherchenbericht wurde für alle Patentansprüche erstellt

| Recherchenort | Abschlußdatum der Recherche | Prüfer |
|---|---|---|
| München | 12. Mai 2006 | Goldbacher, U |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 2797

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2006

| Im Recherchenbericht angeführtes Patentdokument | Datum der Veröffentlichung | Mitglied(er) der Patentfamilie | Datum der Veröffentlichung |
|---|---|---|---|
| US 2003146094 A1 | 07-08-2003 | CA 2419452 A1 | 14-02-2003 |
| | | CN 1446385 A | 01-10-2003 |
| | | WO 0215314 A1 | 21-02-2002 |
| | | DE 10039959 A1 | 07-03-2002 |
| | | EP 1310007 A1 | 14-05-2003 |
| | | JP 2004507053 T | 04-03-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19850720 A1
- DE 10058083 A1